# FASCICULE DE BREVET EUROPEEN

(11) **EP 0 517 586 B1**
(45) Date de publication et mention de la délivrance du brevet: **14.08.1996**
(21) Numéro de dépôt: 92401516.7
(22) Date de dépôt: 03.06.1992
(51) Int. Cl.: C23F 11/173, C23C 22/78

(54) **Procédé pour former un revêtement anticorrosif à base de copolymère sur une surface métallique**
Verfahren zum Erzeugen einer Antikorrosionsbeschichtung auf Copolymerbasis auf einer Metalloberfläche
Process for forming an anticorrosive coating on the basis of a copolymer on a metal surface

(30) Priorité: 04.06.1991 FR 9106752
(43) Date de publication de la demande: 09.12.1992
(73) Titulaire: SOLLAC, F-92800 Puteaux (FR)
(72) Inventeur: Antoine, Philippe, F-84000 Avignon (FR)
(74) Mandataire: Polus, Camille

(56) Documents cités:
- EP-A- 0 205 827
- EP-A- 0 275 051
- FR-A- 1 550 708
- FR-A- 2 023 505
- FR-A- 2 645 868
- US-A- 3 459 691
- US-A- 3 565 851
- US-A- 3 644 566
- US-A- 4 148 838

## Description

La présente invention concerne l'utilisation d'un copolymère séquencé pour conférer à une substance métallique, notamment à une tôle métallique, une protection temporaire contre la corrosion et diminuer le coefficient de frottement de cette surface.

Le problème de la protection des surfaces métalliques et, plus particulièrement, des tôles métalliques, contre la corrosion atmosphérique est une préoccupation constante des industriels.

En effet, après les opérations de laminage à chaud des produits plats et de laminage à froid en vue d'en réduire l'épaisseur, on fait subir aux tôles obtenues un décapage, puis celles-ci sont stockées dans un entrepôt ou transportées chez un client. Les tôles sont alors directement soumises aux actions du milieu ambiant et se corrodent avec le temps avant de parvenir chez l'utilisateur.

Il est convenu que la corrosion atmosphérique représente de loin le facteur de corrosion le plus important. Elle agit par l'intermédiaire d'une pellicule très mince d'eau condensée sur la surface des tôles métalliques, cette pellicule contenant des espèces chimiques en solution qui proviennent de l'atmosphère. La corrosion qui prend naissance dans cette pellicule est de type électrochimique.

Afin d'éviter ce type d'attaque "électrochimique", il faut isoler les tôles du milieu ambiant en les recouvrant d'un matériau étanche et résistant à ce milieu, comme par exemple au moyen d'huilage. Il convient également de doter les surfaces des tôles métalliques d'un potentiel de réactivités chimiques contraires à celles qui provoquent la corrosion.

Actuellement, certains produits, destinés à une utilisation différée, sont livrés huilés aux clients, l'huilage des produits n'intervenant qu'en fin de ligne de fabrication, immédiatement après le décapage. Dans ce cas, dès la réception des produits par les clients, ceux-ci doivent en dégraisser les surfaces avant d'envisager une quelconque utilisation.

On comprend alors qu'il est très avantageux de protéger temporairement les tôles métalliques contre la corrosion, pour une durée minimale de deux mois en s'affranchissant de l'huilage qui entraîne une opération supplémentaire chez le client. Cette durée correspond au "temps mort" entre la finition du produit et sa réception par le client.

Parmi les méthodes connues de protection des produits décapés non huilés, citons les inhibiteurs de corrosion, par exemple à base d'amines, les revêtements à base de matière plastique, telles que des résines ou des élastomères, et les revêtements métalliques ou inorganiques.

L'inconvénient majeur lié à l'utilisation des produits anti-corrosion classiques réside dans le fait qu'ils présentent une résistance à la corrosion très limitée dans le temps, à savoir une vingtaine de jours. Au-delà, ils ne sont plus efficaces, le phénomène de la corrosion apparaît et dégrade les tôles métalliques.

Dans un autre domaine technique, qui est celui du formage des métaux par déformation plastique à froid, notamment par emboutissage de tôles métalliques, il est connu que la contribution des forces de frottement entre une tôle et un outil lors de la déformation représente de 20 à 40% de l'énergie totale absorbée par l'opération et se transforme de manière intégrale en énergie thermique.

Par ailleurs, les déformations mises en oeuvre sur la tôle s'effectuant sous des pressions très élevées pendant des temps très courts, des frottements apparaissent entre la tôle et l'outil au cours de l'opération, provoquant ainsi des adhérences ou grippages, c'est à dire un arrachement de particules métalliques. Dans des cas extrêmes, la tôle atteint la limite à la rupture mécanique.

Par conséquent, on cherche à diminuer le coefficient de frottement tôle-outil en utilisant un lubrifiant solide ou liquide, que l'on place sur la tôle et/ou sur l'outil et qui constitue une couche antifriction. Il empêche le contact direct entre la tôle à déformer et l'outil et réduit ainsi le frottement.

On connaît des traitements de surface de la tôle qui permettent d'améliorer le coefficent de frottement et ainsi de contribuer à une meilleure déformation à froid.

La phosphatation, notamment, est l'un de ces traitements et l'utilisation de phosphates de zinc est connue pour améliorer la qualité des déformations à froid. Cependant, la phosphatation est un procédé de conversion chimique, c'est à dire qu'elle altère les propriétés chimiques de la surface de la tôle. Or, lorsque la déformation de la tôle est achevée, on peut procéder, selon l'application industrielle envisagée, à un traitement chimique de la tôle et à cette occasion, des incompatibilités réactionnelles peuvent se produire et par là même, nuire à la réalisation dudit traitement. En outre, lorsque l'on veut souder des tôles métalliques phosphatées, des problèmes apparaissent du fait du comportement singulier des tôles vis à vis des produits de soudure.

On connaît également des produits que l'on dépose sur une tôle métallique en vue d'améliorer l'aptitude de ladite tôle à être déformée à froid, en particulier pour améliorer son aptitude à l'emboutissage. Notamment, le brevet français FR-A-2 630 604 décrit des sels de métal alcalin, comme par exemple le phosphate de potassium, K₃PO₄, qui présente des propriétés lubrifiantes lorsqu'il est mélangé avec une huile de lubrification au moment de l'emboutissage.

Au regard des inconvénients et des limitations de la technique antérieure, la présente invention se propose de fournir un revêtement pour des surfaces métalliques, notamment des tôles métalliques, permettant d'apporter une protection temporaire améliorée contre la corrosion et de diminuer le coefficient de frottement de la surface, ainsi que le procédé d'application du revêtement sur celle-ci.

L'invention a pour objet l'utilisation d'un copolymère séquencé formé d'au moins deux séquences (ou blocs),
- la première consistant en un motif à base d'un monomère siloxane, et
- la seconde consistant en un motif à base de monomères acryliques ou vinyliques, pour conférer à une surface métallique, notamment à une tôle métallique, une protection temporaire contre la corrosion et diminuer le coefficient de frottement de cette surface, selon laquelle on applique sur ladite surface une couche d'une solution comprenant un tel polymère.

Le monomère siloxane est notamment le diméthylsiloxane. Dans ce cas les copolymères utilisés selon l'invention sont à base de polydiméthylsiloxane. La première séquence peut aussi comprendre, outre le monomère siloxane, un monomère acrylique ou vinylique.

Selon une caractéristique de l'invention, le monomère acrylique faisant partie de la première et/ou seconde séquence est choisi parmi les esters méthacryliques.

Les esters méthacryliques sont choisis de préférence parmi le méthacrylate de méthyle, le méthacrylate de butyle et le méthacrylate d'hydroxyéthyle.

Un copolymère typique selon l'invention comprend (i) un premier bloc formé de trois monomères : méthacrylate de méthyle, méthacrylate d'hydroxyéthyle et diméthylsiloxane, dont les proportions en poids dans ledit bloc sont respectivement comprises entre 30 et 50%, 0 et 20%, 40 et 60%, et (ii) un second bloc formé de trois monomères; méthacrylate de méthyle, méthacrylate de butyle et méthacrylate d'hydroxyéthyle, dont les proportions en poids dans ledit bloc sont respectivement comprises entre 30 et 50%, 30 et 50%, 10 et 30%.

De préférence ce copolymère comprend (i) un premier bloc formé des monomères méthacrylate de méthyle, méthacrylate d'hydroxyéthyle et diméthylsiloxane dont les proportions respectives en poids dans ledit bloc sont égales à 40,10 et 50%, le bloc (i) représentant 60% en poids du copolymère, (ii) un second bloc formé des monomères méthacrylate de méthyle, méthacrylate de butyle et méthacrylate d'hydroxyéthyle dont les proportions respectives en poids dans ledit bloc sont égales à 40,40 et 20%, le bloc (ii) représentant 40% en poids du copolymère.

Le solvant est choisi parmi les cétones, les esters, les chloroalcanes et les composés aromatiques. Ces composés organiques ont une faible tension superficielle et sont choisis dans le but d'éviter les différences de miscibilité et pour obtenir une dispersion du copolymère dans ces solvants la plus homogène possible.

Parmi les cétones, on choisit de préférence l'acétone, la méthyléthycétone ou la cyclohexanone.

Parmi les esters, on choisit de préférence l'acétate d'éthyle ou l'acétate de butyle.

Parmi les chloroaclanes, on choisit de préférence le trichloro-1,1,1 éthane.

Parmi les composés aromatiques, on choisit de préférence le toluène ou le xylène.

De manière avantageuse, la solution contient de 2 à 10 g/l de copolymère.

Selon une caractéristique de l'invention on procède à un chauffage préalable de la solution avant de l'appliquer sur la tôle métallique. La température de chauffage est notamment comprise entre 20 et 40°C.

L'application de la couche sur la surface métallique, notamment sur la face de la tôle, peut s'effectuer de différentes manières :
- par pulvérisation au pistolet, pistolet,
- au trempé,
- par rotation,
- par enduction au pinceau, à la brosse, au rouleau,
- par laquage en bande.

Selon une autre caractéristique de l'invention, on effectue un séchage de la couche protectrice après son application sur la surface métallique. La température de séchage est notamment comprise entre 70 et 100°C, selon le solvant utilisé, par exemple environ 80°C.

L'invention a également pour objet un procédé pour conférer à une tôle métallique une protection temporaire contre la corrosion et diminuer le coefficient de frottement de cette tôle, dans lequel on applique sur ladite tôle une couche d'une solution comprenant un copolymère séquencé formé d'au moins deux séquences, la première consistant en un motif à base de monomère silovane et la seconde consistant en un motif à base de monomères acryliques ou vinyliques, la couche appliquée sur la tôle ayant une épaisseur comprise entre 0,01 µm et 3 µm. Préférentiellement, la couche a une épaisseur égale à 0,1 µm.

L'invention sera mieux comprise à l'aide de la description qui va suivre, donnée uniquement à titre d'exemple.

Le procédé selon l'invention concernant la formation d'un revêtement sur une surface métallique, s'applique à une tôle métallique préalablement décapée, mais peut également s'appliquer à une tôle métallique préalablement revêtue (par phosphatation, chromatation, etc).

Le procédé est mis en oeuvre sur une ligne de traitement par exemple à partir d'une tôle laminée à froid.

Le procédé s'applique également sur une tôle laminée à chaud.

La surface métallique peut être un fil.

### EXEMPLE

Avant de mettre en oeuvre le procédé selon l'invention, on fait subir à la tôle un décapage dans des bains acides, par exemple dans l'acide nitrique, afin d'éliminer les substances chimiques adhérentes à la surface et qui gêneraient, par la même, l'application ultérieure d'un revêtement. Ensuite, la tôle est immergée dans des bacs d'eau de rinçage pour enlever toute trace d'acide.

On applique sur au moins une face de la tôle décapée une couche d'une solution comprenant :
- un copolymère comprenant :
   (i) un premier bloc formé de trois monomères méthacrylate de méthyle, méthacrylate d'hydroxyéthyle et un diméthylsiloxane dont les proportions respectives en poids sont de 40, 10 et 50%, le bloc (i) représentant 60% en poids du copolymère,
   (ii) un second bloc formé de trois monomères méthacrylate de méthyle, méthacrylate de butyle et méthacrylate d'hydroxyéthyle dont les proportions respectives en poids dans ledit bloc sont de 40, 40 et 20% le bloc (ii) représentant 40% en poids du copolymère, et
- un solvant défini ci-après.

Les monomères acryliques utilisés selon l'invention ont une solubilité supérieure à celle du monomère siloxane.

Le paramètre de solubilité est défini dans "Polymer and book" de J. BANDRUP (éd. Wiley interscience 1976).

Pour le groupe diméthylsiloxane, le paramètre de solubilité a une valeur de 7,5 (cal/cm³)^{1/2}; les paramètres de solubilité respectifs du méthacrylate de méthyle, du méthacrylate d'hydroxyéthyle et du méthacrylate de butyle prennent les valeurs suivantes : 10, 11, 10 (cal/cm³)^{1/2} respectivement, donc supérieurs à celui du diméthylsiloxane.

Un tel copolymère est connu comme composant de mélanges à base de résines polyuréthannes et d'élastomères et également comme modificateur de surface des poudres qui entrent dans la composition des pigments de peinture.

Selon l'invention on a pu constater que les copolymères comprenant un polydiméthylsiloxane présentent une bonne adhésion sur les tôles métalliques.

Dans ce mode de réalisation de l'invention, le solvant choisi est du trichloro-1,1,1 éthane. Du fait de sa basse température d'ébullition, 74,1°C sous la pression atmosphérique normale, ce solvant peut être évaporé avec une faible énergie comparativement à d'autres solvants industriels.

La solution du copolymère dans le trichloroéthane est appliquée sous forme de couche sur la tôle métallique à une température de 30°C. Ce chauffage permet d'homogénéiser la solution et ainsi d'améliorer la dissolution des copolymères en présence.

Dans une dernière étape du procédé, on effectue un séchage de la couche immédiatement après son application sur la tôle. Le séchage s'effectue au moyen de sécheurs à air chaud à environ 80°C, cette température est supérieure à la température d'ébullition du solvant afin de faciliter son évaporation.

Le procédé précédemment décrit permet d'obtenir un produit qui est une tôle métallique revêtue du copolymère selon le mode de réalisation de l'invention. La couche de revêtement organique ainsi obtenu a une épaisseur égale à 0,1 µm.

Le revêtement organique confère à la tôle métallique des propriétés permettant d'améliorer sa résistance à la corrosion. Il est non poreux, inerte à l'égard du milieu environnant agressif et, adhère suffisamment à la tôle pour éviter que la vapeur d'eau traverse l'écran protecteur que constitue le revêtement et initie une réaction de corrosion à la surface de la tôle.

Des essais comparatifs ont été effectués avec des inhibiteurs de corrosion classiques à base d'amines et ils ont révélé une tenue à la corrosion d'au moins 60 jours pour les éprouvettes de tôles métalliques traitées avec le copolymère selon l'invention, que l'application ait été effectuée au trempé ou par rotation.

Par contre, les inhibiteurs de corrosion se sont révélés efficaces jusqu'à 20 jours, période après laquelle la corrosion a débuté.

Ainsi, les tôles métalliques munies d'un revêtement organique tel que précédemment décrit, peuvent être laissées au contact de l'air ambiant sans que le client n'ait à souffir d'une qulconque dégradation des tôles. En outre, le cient est déchargé de l'opération consistant à éliminer l'huile protectrice dont sont revêtues certaines tôles aujourd'hui.

De plus, le revêtement de la tôle selon l'invention présente des propriétés de lubrification très intéressantes dans le domaine du formage des métaux par déformation plastique à froid et notamment dans l'emboutissage.

En effet, grâce à de telles propriétés, lors de la déformation d'une tôle par un outil, on peut:
- augmenter la durée de vie de l'outillage,
- obtenir des tôles embouties de meilleure qualités, notamment en ce qui concerne l'état de surface,
- réaliser des pièces aux formes complexes ou augmenter la profondeur des emboutis (de telles pièces étant difficiles à réaliser car la limite technologique liée à l'interface tôle-outil est atteinte et on ne peut plus agir sur les conditions opératoires de l'emboutissage, à savoir la vitesse d'emboutissage, la forme du flan et la pression de serre-flan).

Lors de l'emboutissage, l'utilisation d'une huile est malgré tout indispensable pour éviter un grippage.

Des essais ont été menés pour tester la qualité d'amélioration du coefficient de frottement du revêtement organique, en prenant comme élément de comparaison un sel de métal alcalin et notamment le phosphate de potassium K₃PO₄, connu pour améliorer l'aptitude d'une tôle à la déformation.

Les essais révèlent une diminution du coefficient de frottement des tôles revêtues avec le composé organique ainsi qu'un éloignement des limites technologiques conduisant au grippage, ces deux résultats contribuant à l'amélioration des performances d'emboutissage, comme par exemple la profondeur de l'embouti.

Une des caractéristiques fondamentales d'une tôle métallique après un premier traitement est de pouvoir subir un traitement ultérieur. Notamment, l'application d'une peinture impose la préparation préalable du subjectile que l'on veut peindre et, plus particulièrement, une tôle métallique nécessite une étape initiale dite de phosphatation. Cette étape consiste à revêtir la tôle d'un film supplémentaire microcristallin par exemple constitué de phosphate de zinc, de nickel ou de manganèse de quelques micromètres d'épaisseur, très adhérent au subjectile.

Des essais réalisés en laboratoire ont consisté à faire subir un cycle complet de phosphatation tricationique à une tôle métallique revêtue au préalable par le copolymère et ont révélé un film microcristallin tout à fait homogène.

Ainsi, le traitement de la tôle métallique comme il est décrit dans la présente invention, n'altère en rien l'aptitude à la phosphatation de la tôle.

Avantageusement, on a constaté que le copolymère présente également des propriétés de résistance électrique, sa résistivité étant supérieure au mégaohm.mètre.

Dans la famille de composés macromoléculaires organiques utilisables selon l'invention, il y a lieu de mentionner également les copolymères séquencés formés de diméthylsiloxane et de vinylpyridine et les copolymères séquencés formés de diméthylsiloxane et d'esters acryliques.

Par exemple, le paramètre de solubilité de la vinylpyridine est égal à 9,5 (cal/cm³)^{1/2}, la rendant convenable dans l'application selon l'invention.

Les résultats des essais décrits ci-après permettent de mettre en évidence d'une manière significative les propriétés des tôles revêtues par le procédé de l'invention.

### Essai 1

Le copolymère utilisé pour cet essai est celui qui a été décrit dans l'exemple ci-dessus, et sera noté X.

L'essai é été réalisé sur des éprouvettes de tôles d'acier de dimensions 50 x 100 mm sur lesquelles on a appliqué une couche d'épaisseur 0,015 µm d'une solution de trichloro-1,1,1 éthane contenant une concentration de 1% (p/v) de copolymère dissous. L'application est réalisée selon deux méthodes, au trempé et par rotation. Selon la première méthode, l'éprouvette est plongée dans un bain contenant la solution précédemment décrite. Selon la deuxième méthode, l'éprouvette est mise en rotation dans un bain contenant la même solution.

D'autres produits, à titre de comparaison, qui sont des inhibiteurs de corrosion formés de groupement amines et disponibles dans le commerce sous les noms RC305, NAC et MA19 (les produits RC305 et MA19 sont commercialisés par Croda Chemicals et le NAC est commercialisé par quaker) sont mis dans une solution de trichloro-1,1,1 éthane à des concentrations de 0,3 et 0,5% p/v.

Ensuite, ils sont appliqués par aspersion sur des éprouvettes.

Une éprouvette n'ayant subie aucun traitement contre la corrosion sert d'échantillon témoin.

Toutes les éprouvettes traitées, ainsi que le témoin, sont exposés à la corrosion atmosphérique dans une halle de stockage qui réunit des conditions assez sévères : la température est de l'ordre de 30°C et l'humidité relative atteint 70%.

Pendant plusieurs jours on observe les différentes éprouvettes en prenant en compte l'aspect de la corrosion en fonction du temps. L'aspect de la corrosion est relevé sur une échelle de cotation allant de 1 à 5, le coefficient 1 étant attribué à une éprouvette sur laquelle les premières piqûres apparaissent, le coefficient 5 correspondant à la fin de la corrosion.

Le tableau 1 suivant résume l'évolution de la gravité de la corrosion au cours du temps.

**TABLEAU 1**

| PRODUIT | DEBUT CORROSION EN JOURS | FIN CORROSION EN JOURS |
|---|---|---|
| Témoin | 7 | 12 |
| RC 305 | 22 | 33 |
| NAC | 18 | 25 |
| MA 19 | 14 | 30 |
| X appliqué en rotation | 65 | 75 |
| X appliqué au trempé | 120 | 130 |

Les résultats des essais nous montrent la supériorité du produit X selon l'invention sur les inhibiteurs de corrosion, puisque ceux-ci affichent leurs limites au bout de 30 jours environ, alors que les tôles traitées avec le produit X résistent pendant au moins 60 jours à la corrosion; au delà, vers 65 jours, la corrosion est initiées et le processus de dégradation des tôles s'engage très rapidement.

Par ailleurs, le mode d'application préférentiel du copolymère est le trempé du fait qu'il double pour ainsi dire la durée de la protection.

### Essai 2

Les essais qui suivent permettent de mettre en exergue l'influence du produit X selon l'invention sur la mesure des coefficients de frottement d'une tôle.

Des éprouvettes ont été traitées par le procédé de l'invention, à savoir que l'on a appliqué au trempé sur celle-ci une couche d'une solution de copolymère dans le trichloro-1,1,1 éthane à des concentrations respectivement égales à 0,25 et 1% (p/v).

Les essais de frottement ont été réalisés à 'aide d'un tribomètre classique à surfaces parallèles, appelé aussi tribomètre plan-plan.

L'huile choisie pour les essais est la moins lubrifiante des huiles utilisées, il s'agit de l'huile commercialisée par Shell sous la référence 2769E.

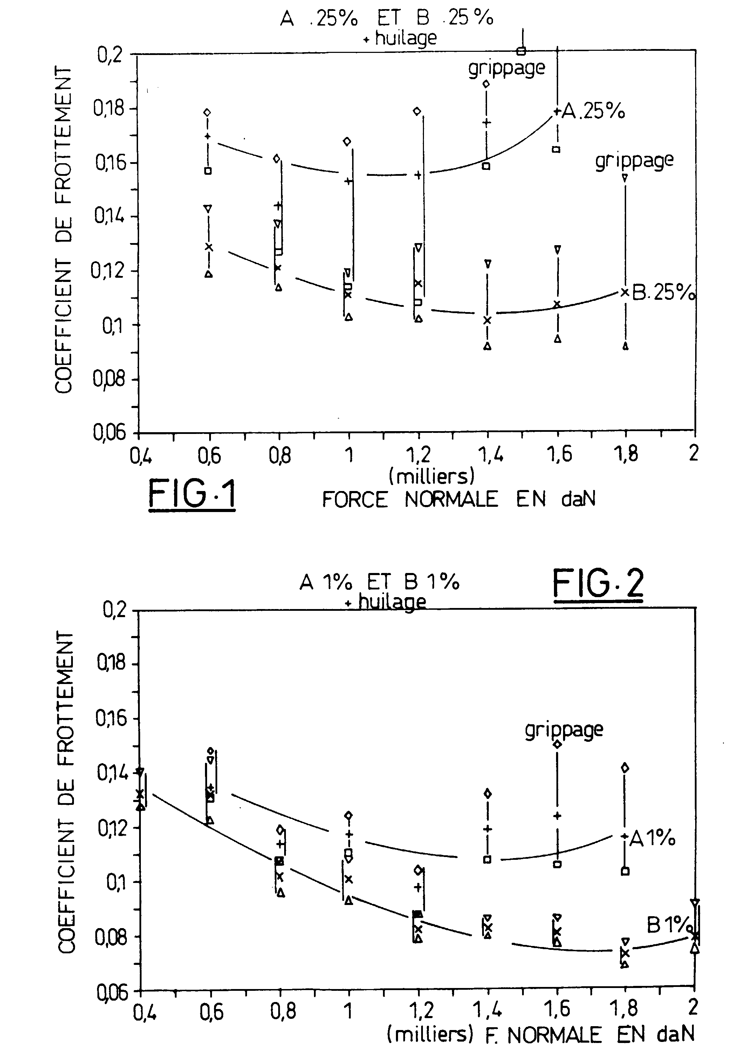

Ainsi que le montre la courbe sur la Fig. 1 annexée, lorsque l'on utilise un produit connu pour ses propriétés améliorant l'aptitude à la déformation des tôles métalliques, tel le phosphate de potassium en solution à 0,25%, celui-ci grippe vers 1600 daN, alors que le produit selon l'invention ne grippe que vers 1800 daN.

Sur la courbe sur la Fig. 2 annexée, les deux produits précédents comparés sont à une concentration de 1% en solution et on constate un grippage du produit au phosphate de potassium vers 1600 daN alors qu'à 2000 daN le produit X ne grippe pas encore, la limite de grippage étant fonction de la concentration de produit utilisé.

Sur la Fig. 2, à 1400 daN, le produit X a un coefficient de frottement de 0,08 par rapport à celui au phosphate qui est de 0,11.

### Essai 3

Un échantillon de tôle métallique sur lequel on a appliqué au trempé une couche d'une solution de 0,3% p/v de copolymère dans le trichloro-1,1,1 éthane, subit un cycle de phosphatation tricationique successivement :
- dégraissage
- rinçage
- affinage
- phosphatation
- rinçage
- séchage

Des clichés pris au microscope électronique montrent un revêtement de phosphate formé de cristaux réguliers et fins de zinc, manganèse et nickel dont la répartition est uniforme à la surface de la tôle, ce qui est révélateur d'une bonne phosphatation.

## Revendications

1. Utilisation d'un copolymère séquencé formé d'au moins deux séquences, la première consistant en un motif à base d'un monomère siloxane et la seconde consistant en un motif à base de monomères acryliques ou vinyliques pour conférer à une surface métallique, notamment à une tôle métallique, une protection temporaire contre la corrosion et diminuer le coefficient de frottement de cette surface, selon laquelle on applique sur ladite surface une couche d'une solution comprenant un tel polymère.

2. Utilisation selon la revendication 1, dans laquelle on sèche la couche après son application sur la surface métallique, notamment à une température comprise entre 70 et 100°c.

3. Utilisation selon la revendication 1 ou 2, dans laquelle le monomère siloxane est le diméthylsiloxane.

4. Utilisation selon l'une des revendications 1 à 3, dans laquelle le motif de la première séquence comprend aussi un monomère acrylique ou vinylique.

5. Utilisation selon l'une des revendications 1 à 4, dans laquelle le monomère acrylique est choisi parmi les esters méthacryliques.

6. Utilisation selon la revendication 5, dans laquelle les esters méthacryliques sont choisis parmi le méthacrylate de méthyle, le méthacrylate de butyle et le méthacrylate d'hydroxyéthyle.

7. Utilisation selon l'une des revendications 4 à 6, dans laquelle le copolymère comprend (i) un premier bloc formé de trois monomères, méthacrylate de méthyle, méthacrylate d'hydroxyéthyle et diméthylsiloxane dont les proportions en poids dans ledit bloc sont respectivement comprises entre 30 et 50%, 0 et 20%, 40 et 60%, (ii) un second bloc formé de trois monomères, méthacrylate de méthyle, méthacrylate de butyle et méthacrylate d'hydroxyéthyle dont les proportions en poids dans ledit bloc sont respectivement comprises entre 30 et 50%, 30 et 50%, 10 et 30%.

8. Utilisation selon la revendication 7, dans laquelle le copolymère comprend (i) un premier bloc formé de trois monomères, méthacrylate de méthyle, méthacrylate d'hydroxyéthyle et diméthylsiloxane dont les proportions respectives en poids dans ledit bloc sont égale à 40, 10 et 50%, le bloc (i) représentant 60% en poids du copolymère, (ii) un second bloc formé de trois monomères, méthacrylate de méthyle, méthacrylate de butyle et méthacrylate d'hydroxyéthyle dont les proportions respectives en poids dans ledit bloc sont égales à 40, 40 et 20%, le bloc (ii) représentant 40% en poids du copolymère.

9. Utilisation selon l'une des revendications 1 à 8, dans laquelle le solvant est choisi parmi les cétones, les esters, les chloroalcanes et les composés aromatiques.

10. Utilisation selon la revendication 9, dans laquelle la cétone est choisie parmi l'acétone, la méthyléthylcétone et la cyclohexanone.

11. Utilisation selon la revendication 9, dans laquelle l'ester est choisi parmi l'acétate d'éthyle et l'acétate de butyle.

12. Utilisation selon la revendication 9, dans laquelle le chloroalcane est le trichloro-1,1,1-éthane.

13. Utilisation selon la revendication 9, dans laquelle le solvant aromatique est choisi parmi le toluène et le xylène.

14. Utilisation selon l'une quelconque des revendications 1 à 13, dans laquelle la solution contient une proportion de 2 à 10 g/l de copolymère.

15. Utilisation selon l'une des revendications 1 à 14, dans laquelle on chauffe la solution avant son application sur la surface métallique à une température comprise entre 20 et 40°C.

16. Utilisation selon l'une des revendications 1 à 15, dans laquelle l'application de la couche est effectuée selon l'une des méthodes suivantes :
- par pulvérisation au pistolet,
- au trempé,
- par rotation,
- par enduction en pinceau, à la brosse, au rouleau,
- par laquage en bande.

17. Procédé pour conférer à une tôle métallique une protection temporaire contre la corrosion et diminuer le coefficient de frottement de cette tôle, dans lequel on applique sur ladite tôle une couche d'une solution comprenant un copolymère séquencé formé d'au moins deux séquences, la première consistant en un motif à base de monomère siloxane et la seconde consistant en un motif à base de monomères acryliques ou vinyliques, la couche appliquée sur ladite tôle ayant une épaisseur comprise entre 0,01 µm et 3 µm.

## Patentansprüche

1. Verwendung eines Sequenz-Copolymers, das aus mindestens zwei Sequenzen gebildet ist, wobei die erste Sequenz besteht aus einer wiederkehrenden Einheit auf Basis eines Siloxan-Monomers und die zweite Sequenz besteht aus einer wiederkehrenden Einheit auf Basis von Acryl- oder Vinyl-Monomeren, um einer Metalloberfläche, insbesondere einem Metallblech, einen vorübergehenden Schutz gegen Korrosion zu verleihen und den Reibungskoeffizienten dieser Oberfläche zu vermindern, indem man auf die genannte Oberfläche eine Schicht aus einer Lösung aufbringt, die ein solches Polymer enthält.

2. Verwendung nach Anspruch 1, bei der man die Schicht nach dem Aufbringen auf die Metalloberfläche, insbesondere bei einer Temperatur zwischen 70 und 100°C, trocknet.

3. Verwendung nach Anspruch 1 oder 2, bei der das Siloxan-Monomer Dimethylsiloxan ist.

4. Verwendung nach einem der Ansprüche 1 bis 3, bei der die wiederkehrende Einheit der ersten Sequenz außerdem ein Acryl- oder Vinyl-Monomer umfaßt.

5. Verwendung nach einem der Ansprüche 1 bis 4, bei der das Acrylmonomer ausgewählt wird aus den Methacrylsäureestern.

6. Verwendung nach Anspruch 5, bei der die Methacrylsäureester ausgewählt werden aus Methylmethacrylat, Butylmethacrylat und Hydroxyethylmethacrylat.

7. Verwendung nach einem der Ansprüche 4 bis 6, bei der das Copolymer umfaßt
(i) einen ersten Block, der von den drei Monomeren Methylmethacrylat, Hydroxyethylmethacrylat und Dimethylsiloxan gebildet wird, deren Gewichts-Mengenanteile in dem genannten Block jeweils zwischen 30 und 50 %, 0 und 20 % und 40 und 60 % liegen, und
(ii) einen zweiten Block, der aus den drei Monomeren, Methylmethacrylat, Butylmethacrylat und Hydroxyethylmethacrylat gebildet wird, deren Gewichts-Mengenanteile in dem genannten Block jeweils zwischen 30 und 50 %, 30 und 50 % und 10 und 30 % liegen.

8. Verwendung nach Anspruch 7, bei der das Copolymer umfaßt
(i) einen ersten Block, der von den drei Monomeren Methylmethacrylat, Hydroxyethylmethacrylat und Dimethylsiloxan gebildet wird, deren Gewichts-Mengenanteile in dem genannten Block jeweils 40 %, 10 % und 50 % betragen, wobei der Block (i) 60 Gew.-% des Copolymers darstellt, und
(ii) einen zweiten Block, der von den drei Monomeren Methylmethacrylat, Butylmethacrylat und Hydroxyethylmethacrylat gebildet wird, deren Gewichts-Mengenanteile in dem genannten Block jeweils 40 %, 40 % und 20 % betragen, wobei der Block (ii) 40 Gew.-% des Copolymers darstellt.

9. Verwendung nach einem der Ansprüche 1 bis 8, bei der das Lösungsmittel ausgewählt wird aus den Ketonen, den Estern, den Chloralkanen und den aromatischen Verbindungen.

10. Verwendung nach Anspruch 9, bei der das Keton ausgewählt wird aus Aceton, Methylethylketon und Cyclohexanon.

11. Verwendung nach Anspruch 9, bei der der Ester ausgewählt wird aus Ethylacetat und Butylacetat.

12. Verwendung nach Anspruch 9, bei der das Chloralkan das 1,1,1-Trichlorethan ist.

13. Verwendung nach Anspruch 9, bei der das aromatische Lösungsmittel ausgewählt wird aus Toluol und Xylol.

14. Verwendung nach einem der Ansprüche 1 bis 13, bei der die Lösung einen Mengenanteil von 2 bis 10 g/l Copolymer enthält.

15. Verwendung nach einem der Ansprüche 1 bis 14, bei der man die Lösung vor ihrem Aufbringen auf die Metalloberfläche auf eine Temperatur zwischen 20 und 40°C erwärmt.

16. Verwendung nach einem der Ansprüche 1 bis 15, bei der das Aufbringen der Schicht unter Anwendung eines der folgenden Verfahren durchgeführt wird:
- Beschichtung mittels einer Spritzpistole,
- Tauchbeschichtung,
- Schleuderbeschichtung,
- Beschichten mit einem Pinsel, mit einer Bürste oder mit einer Walze und
- Bandlackieren.

17. Verfahren, um einem Metallblech einen vorübergehenden Schutz gegen Korrosion zu verleihen und den Reibungskoeffizienten dieses Bleches zu vermindern, bei dem man auf das genannte Blech eine Schicht einer Lösung aufbringt, die ein Sequenz-Copolymer enthält, das aus mindestens zwei Sequenzen gebildet ist, wobei die erste Sequenz besteht aus einer wiederkehrenden Einheit auf Basis eines Siloxanmonomers und die zweite Sequenz besteht aus einer wiederkehrenden Einheit auf Basis von Acryl- oder Vinylmonomeren, wobei die auf das genannte Blech aufgebrachte Schicht eine Dicke zwischen 0,01 und 3 µm hat.

## Claims

1. Use of a block copolymer formed from at least two blocks, the first comprising a structural unit based on a siloxane monomer and the second comprising a structural unit based on acrylic or vinyl monomers, to provide temporary protection against corrosion and to reduce the coefficient of friction of a metal surface, in particular a metal sheet, wherein a layer of a solution containing such a polymer is applied to said surface.

2. Use according to Claim 1, wherein after being applied to the metal surface, the layer is dried in particular at a temperature between 70° and 100°C.

3. Use according to Claim 1 or 2, wherein the siloxane monomer is dimethyl siloxane.

4. Use according to one of Claims 1 to 3, wherein the structural unit of the first block also contains an acrylic or vinyl monomer.

5. Use according to one of Claims 1 to 4, wherein the acrylic monomer is selected from the methacrylic esters.

6. Use according to Claim 5, wherein the methacrylic esters are selected from methyl methacrylate, butyl methacrylate and hydroxyethyl methacrylate.

7. Use according to one of Claims 4 to 6, wherein the copolymer contains
(i) a first block formed from three monomers: methyl methacrylate, hydroxyethyl methacrylate and dimethyl siloxane, of which the percentages by weight in said block are between 30% and 50%, 0% and 20%, and 40% and 60% respectively;
(ii) a second block formed from three monomers: methyl methacrylate, butyl methacrylate and hydroxyethyl methacrylate, of which the percentages by weight in said block are between 30% and 50%, 30% and 50%, and 10% and 30% respectively.

8. Use according to Claim 7, wherein the copolymer contains
(i) a first block formed from three monomers: methyl methacrylate, hydroxyethyl methacrylate and dimethyl siloxane, of which the respective percentages by weight in said block are equal to 40%, 10% and 50%, block (i) representing 60% by weight of the copolymer;
(ii) a second block formed from three monomers: methyl methacrylate, butyl methacrylate and hydroxyethyl methacrylate, of which the respective percentages by weight in said block are equal to 40%, 40% and 20%, block (ii) representing 40% by weight of the copolymer.

9. Use according to one of Claims 1 to 8, wherein the solvent is selected from the ketones, esters, chloroalkanes and the aromatic compounds.

10. Use according to Claim 9, wherein the ketone is selected from acetone, methyl ethyl ketone and cyclohexanone.

11. Use according to Claim 9, wherein the ester is selected from ethyl acetate and butyl acetate.

12. Use according to Claim 9, wherein the chloroalkane is 1,1,1-trichloroethane.

13. Use according to Claim 9, wherein the aromatic solvent is selected from toluene and xylene.

14. Use according to any one of Claims 1 to 13, wherein the solution contains a proportion of 2 to 10 g/l of copolymer.

15. Use according to any one of Claims 1 to 14, wherein before being applied to the metal surface, the solution is heated to a temperature between 20 and 40°C.

16. Use according to one of Claims 1 to 15, wherein the layer is applied using one of the following methods:
- by spraying
- by dipping
- by rotation
- by coating by paint brush, brush or roller
- by strip painting.

17. Process for providing a metal sheet with temporary protection against corrosion and for reducing the coefficient of friction of this sheet, wherein a layer of a solution containing a block copolymer formed from at least two blocks is applied to said sheet, the first of said blocks comprising a structural unit based on siloxane monomer and the second comprising a structural unit based on acrylic or vinyl monomers, and the layer applied to said sheet has a thickness of between 0.01 µm and 3 µm.
